# EUROPÄISCHE PATENTSCHRIFT

(11) **EP 1 153 339 B1**
(45) Veröffentlichungstag und Bekanntmachung des Hinweises auf die Patenterteilung: **19.10.2005**
(21) Anmeldenummer: 00949135.8
(22) Anmeldetag: 27.06.2000
(51) Int. Cl.: G05B 19/042

(54) **VERFAHREN UND VORRICHTUNG ZUR FUNKTIONSAUSWAHL EINER STEUEREINHEIT**
METHOD AND DEVICE FOR FUNCTION SELECTION OF A CONTROL UNIT
PROCEDE ET DISPOSITIF DE SELECTION DE FONCTION D'UNE UNITE DE COMMANDE

(30) Priorität: 29.09.1999 DE 19946548
(43) Veröffentlichungstag der Anmeldung: 14.11.2001
(73) Patentinhaber: ROBERT BOSCH GMBH, 70442 Stuttgart (DE)
(72) Erfinder: KOHLER, Rolf, D-71701 Schwieberdingen (DE); GIESELER, Steffen, D-71739 Oberriexingen (DE); EGE, Taskin, D-71732 Tamm (DE)
(86) Internationale Anmeldenummer: PCT/DE2000/002090
(87) Internationale Veröffentlichungsnummer: WO 2001/023969

(56) Entgegenhaltungen:
- EP-A- 0 293 618
- DE-A- 3 624 139
- DE-A- 3 938 717
- DE-A- 4 219 669
- DE-A- 19 621 902
- PATENT ABSTRACTS OF JAPAN vol. 1996, no. 07, 31. Juli 1996 (1996-07-31) & JP 08 069303 A (MATSUSHITA ELECTRIC WORKS LTD), 12. März 1996 (1996-03-12)
- PATENT ABSTRACTS OF JAPAN vol. 018, no. 600 (P-1826), 15. November 1994 (1994-11-15) & JP 06 222403 A (TOKIN CORP), 12. August 1994 (1994-08-12)
- PATENT ABSTRACTS OF JAPAN vol. 1997, no. 07, 31. Juli 1997 (1997-07-31) & JP 09 062315 A (SONY CORP), 7. März 1997 (1997-03-07)

## Beschreibung

### Stand der Technik

Die Erfindung betrifft Verfahren und Vorrichtungen zur Auswahl wenigstens einer Funktion, die an einem Anschluß einer Steuereinheit realisiert wird gemäß den Oberbegriffen der unabhängigen Ansprüche.

Dazu zeigt die DE 196 21 902 A1 die Mehrfachbelegung einer Kommunikationsleitung einer Steuereinheit mit unterschiedlichen Signalen. Der Gegenstand dieser Offenlegungsschrift geht somit von einem System zur Überlagerung von Informationen aus. Dabei werden erste Informationen durch ein gebildetes analoges Signal repräsentiert wobei zweite Informationen in Form eines gebildeten digitalen Signals vorliegen. Der Kern der Erfindung besteht darin, daß zur Bildung eines Überlagerungssignals das digitale Signal dem analogen Signal überlagert wird. Da dabei die Signale zeitgleich übertragen werden, muß bezüglich der Überlagerung eine Synchronisation durchgeführt werden. Beim Empfänger des Überlagerungssignals muß dieses zur Weiterverarbeitung wieder in die zugrundeliegenden Signale, also das analoge und das digitale Informationssignal aufgespaltet werden. Damit kann eine Eingangsleitung und der beidseitige Anschluß für diese Leitung für ein Steuergerät eingespart werden. Allerdings steigt der Aufwand zur Bildung des Überlagerungssignals, insbesondere bei der Synchronisation, und der nachfolgenden Auftrennung des Übertragungssignals im Steuergerät zur Weiterverarbeitung ganz erheblich.

Einen anderen Weg zur Einsparung von Anschlüssen an Mikroprozessoren offenbart die Schaltungsanordnung für die Betätigung eines Verbrauchers mittels eines Mikroprozessors in der DE 36 24 139 A1. Dabei wird ein am Mikrocomputer selbst angeordneter umschaltbarer bidirektionaler Anschluß dazu benutzt, einerseits einen Verbraucher zu schalten und andererseits ein externes Verbraucherschalten mittels eines Handschalters zu erkennen. Somit wird das bekannte Verfahren der Verwendung eines einzigen bidirektionalen Eingangs statt getrennter Ein- und Ausgänge am Mikroprozessor dahingehend verbessert, daß anstelle der geringen Lasten, also ein Verbraucher mit niedriger Leistung, größere Verbraucher mit hoher Leistung betätigt und angezeigt werden können. Dabei wird bei Betätigung eines Handschalters ein Potential, welches am bidirektionalen Eingang des Mikroprozessors anliegt, auf Masse gezogen, wodurch erkannt wird, daß der Handschalter betätigt wurde, da der bidirektionale Eingang üblicherweise durch einen Innen-pull-up-Widerstand hochohmig ist. Damit können für diesen Spezialfall quasi zwei Funktionen, bezüglich des gleichen Verbrauchers auf einem Anschluß eines Mikroprozessors realisiert werden. Da der verwendete Anschluß direkt am Mikroprozessor liegt, ist aber eine echte Mehrfachfunktionalität bezüglich unterschiedlicher Mikroprozessorausgänge und verschiedener Verbraucher nicht möglich.

Des Weiteren zeigt das Patent Abstract of JP 08069303 ein Steuersystem bei welchem bei Anwendungen hoher Verarbeitungsgeschwindigkeit mit Hilfe eines block check Codes und dessen Vergleich eine Umschaltung von einer on-line Operation zu einer off-line Operation verhindert wird. So kann bei Auftritt eines Fehlers in besagtem block check Code Vergleich das Umschalten in den on-line Betrieb verhindert werden. Dabei wird allerdings kein Pin eingespart.

Gleiches gilt für die DE 42 19 669 A1 die ein Steuergerät zur Berechnung von Steuergrößen zeigt, wobei die Berechnung und Ausgabe dieser Steuergrößen über einen Bus unterdrückt werden kann. Damit wird die Buslast gesenkt. Auch hier kommt es nicht zu einer Pin Einsparung.

Es hat sich gezeigt, daß der genannte Stand der Technik nicht in jeder Hinsicht optimale Ergebnisse zu liefern vermag. Es stellt sich somit die Aufgabe echte Mehrfachfunktionalität eines Anschlusses einer Steuereinheit bzw. eines Steuergerätes zu erzielen und eine weitere Verbesserung der genannten Verfahren und Vorrichtungen zu erreichen.

Diese Aufgabe wird durch die Merkmale der unabhängigen Ansprüche gelöst.

### Vorteile der Erfindung

Die Erfindung geht aus von einem Verfahren und einer Vorrichtung zur Auswahl einer Funktion, welche in einem Anschluß einer Steuereinheit realisiert wird, wobei die zu realisierende Funktion aus wenigstens zwei unterschiedlichen Funktionen ausgewählt wird. Die Auswahl der zu realisierenden Funktion wird dabei durch eine vorgebbare Codierung getroffen, wobei die dann wenigstens zweite Funktion unterdrückt wird, wobei vorteilhafter Weise in der vorgebbaren Codierung eine damit ebenfalls vorgebbare Information bezüglich eines Zeitraumes beinhaltet ist. Dieser Zeitraum bzw. diese Zeitdauer wird dabei zweckmäßigerweise insbesondere als Wartezeit interpretiert, nach welcher von der zu realisierenden Funktion zu einer weiteren, während der Zeitdauer unterdrückten Funktion gewechselt wird, insbesondere dann, wenn die erste Funktion nicht korrekt durchgeführt wird. Die bisher zu realisierende Funktion wird daraufhin ihrerseits unterdrückt.

Damit ist eine einfache Diagnosemöglichkeit gegeben, wodurch auch in der Applikation bei Auftreten einer Fehlfunktion zu einer Diagnose- bzw. Testfunktion gewechselt werden kann. Ebenso kann verhindert werden, daß das System beispielsweise im Kommunikationsmodus bei ausbleiben der Kommunikation in der entstehenden Endlosschleife gefangen ist. Da nach Ablauf der Wartezeit zu einer zweiten Funktion gewechselt wird.

Ebenso ist vorteilhafter Weise durch Vorgabe einer Wartezeit ein Botschafs- bzw. Signalecho herausfilterbar. Wenn nämlich die Wartezeit bis zur Detektion eines Antwort- bzw. Quittungssignals mindestens so gewählt wird, daß ein nicht gewünschtes Echo unberücksichtigt bleibt und erst die echte Antwort erkannt wird und unter Umständen zu einer weiteren Reaktion führt.

Vorteilhafterweise sind die wenigstens zwei Funktionen durch wenigstens zwei unterschiedliche Signale, die am Anschluß der Steuereinheit anlegbar sind, realisierbar. Dabei wird nun das Signal der zu realisierenden Funktion durch eine Codierung ausgewählt und am Anschluß angelegt. Das wenigstens zweite Signal wird daneben unterdrückt. Durch die Auswahl der Codierung, zweckmäßigerweise in einem applizierbaren Datensatz, kann damit vorgegeben werden welches Signal, wann über den Anschluß der Steuereinheit geführt wird.

Damit ist es nicht mehr notwendig, beispielsweise bei der Applikation, Hardwareanpassungen, insbesondere das Umbestücken von Hardwarebrücken, durchzuführen, um zwischen den Funktionen die aufgrund der Mikroprozessorsignale möglich sind, zu wechseln.

Durch die Funktions- bzw. Signalauswahl per Codierung ist eine flexiblere Einsparung von Anschlüssen am Steuergerät und am Kabelbaum möglich. Im Falle der Applikation oder Diagnose können auch hierbei die entsprechenden Leitungen und Anschlüsse eingespart werden. Da aus unterschiedlichen Funktionen, die auch voneinander unabhängig sein können ausgewählt werden kann, ist eine Vielzahl von Anschlußkombinationen denkbar.

Dadurch, daß die Funktionen durch die Codierung nicht zeitgleich realisiert werden bzw. die Signale nicht zeitgleich übertragen werden, kann eine Umsetzung zweckmäßiger Weise derart erfolgen, daß durch die Mehrfachbelegung keine funktionalen Einschränkungen entstehen.

Vorteilhafterweise ist eine der wenigstens zwei Funktionen aus welchen ausgewählt wird der Einsatz des Anschlusses der Steuereinheit als bidirektionale Kommunikationsverbindung mit einer weiteren intelligenten Einheit, insbesondere einer weiteren Steuereinheit.

Zweckmäßiger Weise ist durch die Erfassung der jeweiligen, vorgegebenen Codierung eine automatische Detektion der jeweils notwendigen Funktionalität möglich.

Weitere vorteilhafte Ausgestaltungen sind der Beschreibung und den Ansprüchen zu entnehmen.

### Zeichnung

Figur 1 zeigt einen prinzipiellen Schaltungsaufbau zu beschriebenen Signal- bzw. Funktionsumschaltung einer Signalausgabe und der Verwendung einer Kommunikationsleitung.
Figur 2 zeigt eine konkrete Ausführungsvariante mit Open-Drain-Ausgängen des Mikroprozessors.
   Der Verfahrensablauf mit der Codierung und der Wartezeit zur Signalauswahl ist in Figur 3 in einem Flußdiagramm dargestellt. Die Ausführung kann dabei einerseits im Mikrocomputer ebenso wie einer weiteren externen Steuereinheit stattfinden.

### Beschreibung der Ausführungsbeispiele

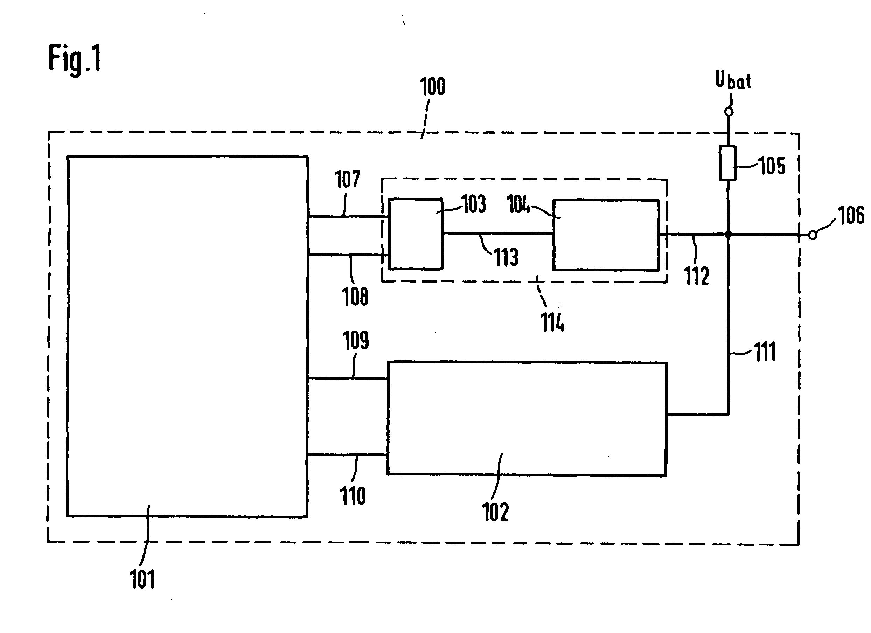

Figur 1 zeigt eine prinzipielle Schaltungsanordnung in einem Steuergerät 100 zur Realisierung zweier Funktionen bzw. zur Auswahl aus zwei Signalpfaden an einem Steuergeräteanschluß 106. Ein Mikrocontroller 101 ist dabei über zwei Leitungen 107 und 108 mit einem Element 103 verbunden. Ebenso ist Mikrocontroller 101 über Leitungen 109 und 110 mit einem Element 102 verbunden. Das Element 103 wird über eine Leitung 113 mit einem weiteren Element 104 verbunden. Die Elemente 103 und 104 sowie deren Verbindungsleitung 113 sind in einem Element 114 zusammenfaßbar. Die nun dargestellten Elemente 114 und 102 führen über Leitung 111 und 112 auf den gleichen Steuergeräteanschluß 106. Durch die Elemente 102 und 114 werden auf dem Steuergeräteanschluß 106 jeweils unterschiedliche Funktionen realisiert. In einer konkreten Ausführungsform wird über Leitung 108 ein Ausgangssignal des Mikrocontrollers 101, beispielsweise ein Drehzahlsignal, also z.B. ein für den Geschwindigkeitsmesser im Fahrzeug verwendbares Ausgangssignal, an das Element 103 übermittelt. Das Element 103 ist dabei ein Logikbauteil, beispielsweise ein Gatterbaustein, insbesondere ein NAND-Gatter, welches die Information des Ausgangssignals auf Leitung 108 entsprechend dem Signal auf Leitung 107 auf Leitung 113 ausgibt. Das Signal auf Leitung 107 fungiert somit als eine Art Freigabesignal für Leitung 108 bzw. deren Signal.

Das Signal auf Leitung 113 erreicht dann Element 104. In dieser speziellen Ausführungsform ist Element 104 ein Endstufenbaustein. Dieser Endstufenbaustein zur Signalausgabe ist beispielsweise je nach Technik als nichtinvertierende Open-Drain oder Open-Collector-Endstufe ausgebildet. Durch diesen Endstufenbaustein 104 ist dann der Informationsinhalt des Ausgangssignals von Leitung 108 über Leitung 112 auf dem Steuergeräteanschluß 106 ausgebbar, was durch die Auswertung des Signals bzw. Anzeige des Signals in einem Aktuator, insbesondere dem genannten Geschwindigkeitsmesser, eine erste Funktion darstellt. Ein erster Funktionspfad besteht somit aus dem Mikrocontroller 101, den Leitungen 107 und 108, dem Element 114 und Leitung 112 auf den Anschluß 106.

Die Leitungen 109 und 110 stellen Leitungen für Ausgangs- und Eingangsinformationen bzw. Ausgangs- und Eingangssignale des Mikrocontrollers 101 dar. Mittels einer seriellen Datenschnittstelle 102 werden die Signale der unidirektionalen Leitungen 109 und 110 dann auf die bidirektionale Leitung 111 übertragen. Dadurch kann die Leitung 111 als Kommunikationsleitung mit dem Mikrocontroller 110 via Steuergeräteanschluß 106 dienen, was eine zweite Funktion darstellt. Ein zweiter Funktionspfad besteht somit aus Mikrocontroller 101, den Leitungen 109 und 110, dem Element 102 und Leitung 111 auf den Anschluß 106.

Die serielle Datenschnittstelle 102 ist beispielsweise nicht invertierend ausgebildet. Um die beiden für Anschluß 106 funktionsrealisierenden Elemente 114 und 102 wie in Figur 1 dargestellt über einen Verbraucher 105, insbesondere einen Widerstand, an die Versorgungsspannung bzw. das Versorgungsspannungspotential Ubat gemeinsam auf den Steuergeräteanschluß 106 zu führen enthält die serielle Datenschnittstelle 102 ebenfalls einen Endstufenbaustein auf der bidirektionalen Seite. Auch dieser ist dann wie der Endstufenbaustein 104 je nach Technik als Open-Collector oder Open-Drain-Endstufenbaustein ausgebildet was die gezeigte Verknüpfung ermöglicht.

Durch Verwendung einer Invertierung in Element 103 oder Element 104, wie beispielsweise durch Verwendung der NAND-Funktion in Element 103, ist für den Fall, daß die Signalausgabe über die Leitungen 107 und 108 des Mikrocontrollers 101 unterdrückt wird, also ein Null-Signal anliegt, durch die Verknüpfung der Leitungen 111 und 112, z.B. als Wired-AND auf den Steuergeräteanschluß 106, gewährleistet, daß die Kommunikationsleitung 111 freigeschaltet ist. Bei einem unterdrückten Ausgang, also eigentlichem Nullsignal über Leitung 113, wird durch die Invertierung in 103 ein Einssignal erzielt. Bei nachfolgender Wired-AND Verknüpfung der Leitungen 111 und 112 wird damit die Information auf Leitung 111 auf den Ausgang 106 ausgegeben, also die Kommunikationsfunktion sichergestellt.

Vergleichbare Lösungen sind selbstverständlich dadurch möglich, daß die Ausgänge des Mikrocontrollers 101 bzw. die Ausgänge auf Leitung 111 und 1112 entweder active high oder active low sind, die Verdrahtung in positiver oder negativer Logik erfolgt und damit ein Wired-AND oder Wired-OR auf dem Anschluß 106 entsteht.

Der Übersicht halber sind erfindungsgemäß zur Beschreibung nicht benötigte Bauelemente des Steuergerätes 100 in Figur 1 weggelassen.

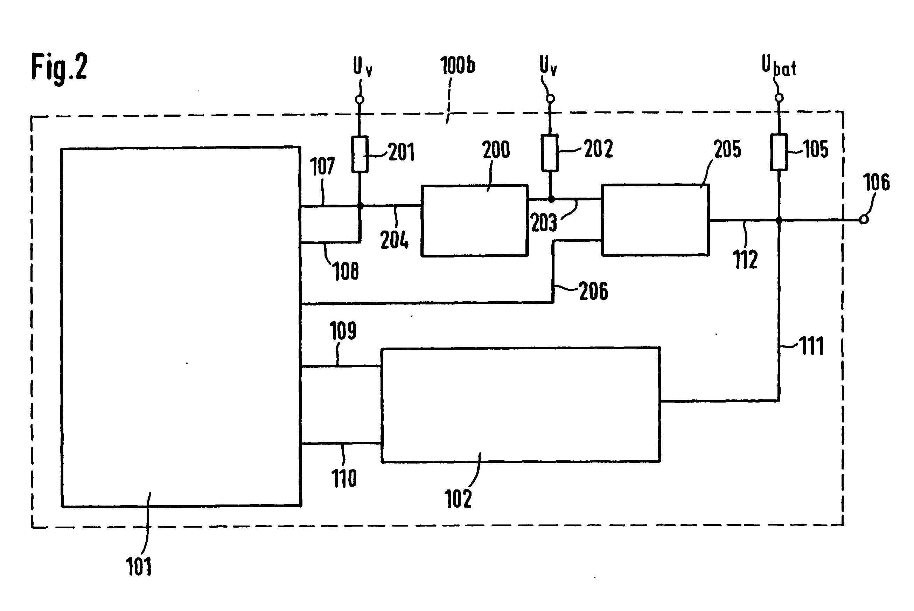

Figur 2 zeigt eine konkrete Schaltungsausführung in einem Steuergerät 100b, welche zum Teil von der Ausnutzung der in dem Steuergerät 100b vorhandenen Bausteinresourcen abhängt. So kann z.B. die NAND-Funktion aus Figur 1 mit Hilfe von Port-Konfigurationmöglichkeiten des Mikrocontrollers 101 sowie der Inverterfunktionen anderer Bausteine gebildet werden. Der Ausgang auf Leitung 107 kann somit einerseits als Input/Output-Low oder als Open-Drain-Output konfiguriert sein. Das Ausgangssignal auf Leitung 108 wird z.B. über einen Open-Drain-Ausgang auf diese Leitung gegeben. Durch diese Port-Konfigurationsmöglichkeiten der Ausgänge für Leitung 107 und 108 können diese über einen Verbraucher 201, insbesondere einen Widerstand, auf eine Versorgungsspannung UV, wobei UV insbesondere kleiner Ubat ist, gezogen werden. Damit sind beide Signale bzw. die Leitungen 107 und 108 auf Leitung 204 UND-verknüpft. Eine nachgeschaltete invertierende Kleinsignalendstufe beispielsweise als Teil eines vorhandenen integrierten Schaltkreises vollendet die Realisierung der NAND-Funktion wie sie in Figur 1 angedacht ist. Der erste Funktionspfad besteht hier somit aus Mikrocontroller 101, den Leitungen 107 und 108, dem Verbraucher 201, Leitung 204, dem Element 200, dem Verbraucher 202, der Leitung 203, dem Element 205 mit Resetleitung 206 und Leitung 112 auf den Anschluß 106.

Die invertierende Kleinsignalendstufe 200 kann dabei beispielsweise Teil der seriellen Datenschnittstelle 102 sein und dennoch vom ersten Funktionspfad genutzt werden. Zur Pegelanpassung wird das aus der invertierenden. Kleinsignalendstufe 200 ausgegebene Signal auf Leitung 203 über den Verbraucher 202 ebenfalls an Versorgungsspannung angeschlossen. An der Leitung 203 angeschlossen ist ein Endstufenbaustein 205, vergleichbar dem Element 104 aus Figur 1, der ebenfalls als nichtinvertierende Open-Drain-Endstufe ausgebildet sein kann. Neben dem Signal auf Leitung 203, welches beispielsweise die Drehzahlinformation, u.s.w. enthält wird dem Endstufenbaustein 205 über Leitung 206 ein Resetsignal zugeführt. Dieses Signal wird beispielsweise aus der Resetschaltung des Mikrocontrollerkerns dem Endstufenbaustein 205 zugeführt.

Das Reset-Signal sorgt dafür, daß bei inaktivem Prozessor der Endstufenbaustein 205 kein aktiv-low Signal liefert.

Damit ist sichergestellt, daß auch bei inaktivem Prozessor der Baustein 205 den Anschluß 106 nicht klammert.

Das Ausgangssignal aus dem Endstufenbaustein 205 gelangt dann wiederum auf Leitung 112. Der Funktionspfad 2 startet wie bei Figur 1 beschrieben aus der seriellen Datenschnittstelle des Mikrocontrollers 101 über Ausgangsleitung 109 und Eingangsleitung 110. Die serielle Datenschnittstelle 102, insbesondere nichtinvertierend mit Open-Drain-Endstufenbaustein kann dabei ebenfalls Teil eines im Steuergerät verbauten Multifunktions-IC's sein. So kann der Baustein bzw. der integrierte Schaltkreis ebenfalls einen Spannungs-Stabilisator mit Resetsignalgenerierung enthalten. Somit sind auch diese Teile also die serielle Datenschnittstelle 102 und die invertierende Kleinsignalendstufe 200 mit dem Resetsignal gekoppelt, noch dazu, wenn sie sich im selben Baustein befinden. Die Ausgänge des integrierten Schaltkreises bzw. Multifunktionsbausteins, der optional die Elemente 200 und 102 enthält sind dann im Resetzustand hochohmig.

Die Bausteinausgänge also Leitung 112 und 111 bzw. die dann darauf befindlichen Signale sind dann erneut über Verbraucher 105 auf die Spannung bzw. das Potential Ubat gezogen und somit auf den Anschluß 106 des Steuergerätes verknüpft. Damit sind hier wie in Figur 1 die beiden Funktionen bzw. die zugehörigen Signale am Mikrocontroller 101 selbst noch getrennt geführt. Sie werden erst auf der nachgeschalteten, beschriebenen Hardware verknüpft. Die jeweils nicht erwünschte Funktion bzw. das zugehörige Signal wird per Software dadurch unterdrückt, daß es in einen passiven Zustand geschaltet wird.

Das Signal auf Leitung 204, bzw. Leitung 204 selbst wird passiv, indem auf Leitung 108 eine Null bzw. Low ausgegeben wird (Umschaltung von Eingang auf Ausgang aktiv low). Die Leitung 108 ist dann notwendig, wenn das Signal auf Leitung 107 vom Prozessor 101 nicht abschaltbar ist.

Das Signal auf Leitung 109 wird passiv, indem es fest auf Eins bzw. High gehalten wird. Dies entspricht bei der Funktion Kommunikation der Umschaltung von serieller Ausgabe auf statisches Port aktiv high.

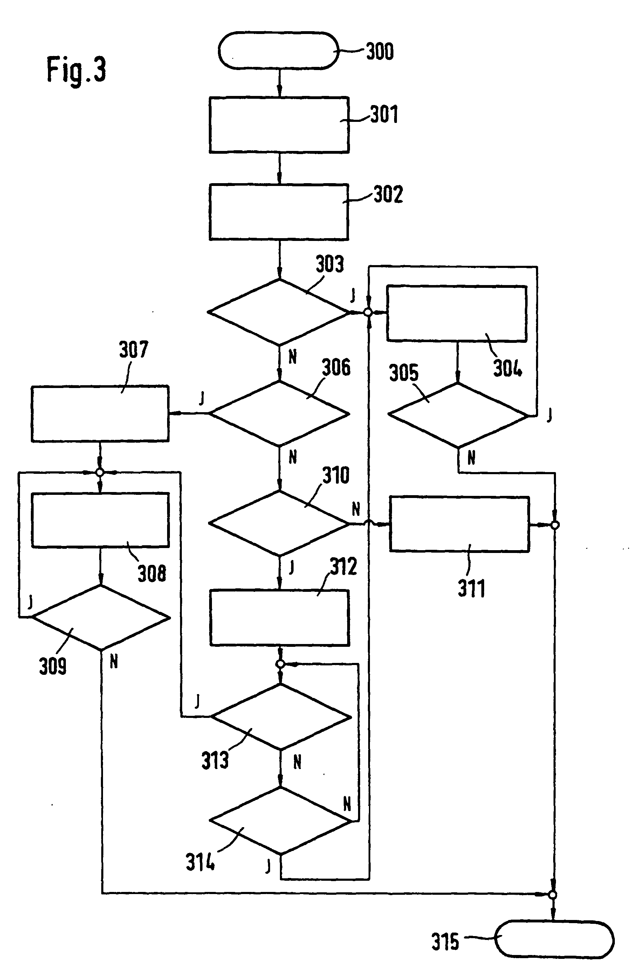

Einen Verfahrensablauf zur Funktionsumschaltung mittels Codierung, wodurch somit per Software Hardwaresignale festgelegt werden, zeigt Figur 3. Das Verfahren kann dabei einerseits im Steuergerät 100 bzw. 100b selbst ablaufen oder vollständig oder teilweise von einer weiteren Steuereinheit, die über Anschluß 106 angeschlossen wird, beispielsweise ein Applikationsgerät, durchgeführt werden. In Block 300 erfolgt der Start eines Durchlaufs des Verfahrens. Dies kann extern oder intern angestoßen sein. In Block 301 wird die Codierung, das sogenannte Pindatum Dp eingegeben bzw. initialisiert. Dies kann beispielsweise in einem applizierbaren Datensatz geschehen. Diese Eingabe des Pindatums kann einzeln oder in Form einer reset- bzw. zeitgesteuerten Tabelle mit mehreren nacheinander folgenden Pindaten geschehen. Damit kann im Programmlauf je nach Pindatum Dp, also per Software, festgelegt werden welche Funktion auf dem Anschluß 106 realisiert ist bzw. realisiert wird.

Im Block 302 wird die Codierung in Form des Pindatums Dp gelesen. In der nachfolgenden Abfrage 303 wird dann überprüft, ob das Pindatum Dp einer gespeicherten Vergleichs-Codierung Dp1 entspricht. Ist dies der Fall, gelangt man zu Block 304 in welchem Funktion 1, also der Funktionspfad mit Block 114 realisiert wird. Hier wird beispielsweise das vorgenannte Ausgangssignal also ein Signal 1 auf Pin 106 ausgegeben. In diesem Fall wird das Ausgangssignal auf Leitung 108 durch das Freigabesignal auf Leitung 107 freigeschaltet und die Funktion der Kommunikationsleitung 111 unterdrückt, in dem die Datenleitungen 109 und 110 in einen passiven Zustand geschaltet werden.

Beispielsweise zeitgesteuert wird dann in Abfrage 305, insbesondere nach Ablauf eines vorgebbaren Zeitabschnitts überprüft, ob Funktion 1, hier speziell die Signalausgabe weitergeführt werden soll. Prüfkriterien für Abfrage 305 können beispielsweise eine Endequittung im Signalpfad, ein Zeitablauf eines Zeitgliedes ebenso wie eine Bedarfsanforderung für Funktion 2 sein. Gleichermaßen kann ein beliebiger Reset als Abbruchbedingung für die Signalausgabe gelten.

Im Falle des gewünschten Abbruches von Funktion 1 gelangt man zu Block 315 dem Ende des Durchlaufs. Im anderen Fall wird weiter Funktion 1 durchgeführt. Entspricht die gelesene Codierung nicht Dp1, gelangt man zu Abfrage 306. Darin wird überprüft, ob das Pindatum also die Codierung Dp einer weiteren vorgebbaren Codierung Dp2 entspricht. Ist dies der Fall, gelangt man zu Block 307.

Da Funktion 2 in dem speziellen Ausführungsbeispiel die Verwendung von Anschluß 106 als Kommunikationsverbindung vorsieht, erfolgt im Block 307 die Sendung einer Botschaft zum Aufwecken der Meßmittel bzw. Applikationsmittel beispielsweise in Form eines bestimmten Protokolls. Dieses Aufwecksignal im Block 307 führt zu Block 308.

Darin wird die Funktion 2, die Verwendung des Anschlusses 106 bzw. Leitung 111 als bidirektionale Kommunikationsverbindung ausgeführt. Dabei werden insbesondere Signale 2 zugehörig zu Funktion 2 über den Steuergeräteanschluß 106 übertragen. Insbesondere ist das Steuergerät 100 bzw. 100b ab dann zum Botschaftsempfang über die Kommunikationsleitung 111 bereit.

Im nachfolgenden Block 309 wird dann überprüft, ob Funktion 2 weitergeführt werden soll oder nicht. Diese Überprüfung kann auch hier über eine Endequittung über die Kommunikationsleitung 111, einen vorgebbaren Zeitablauf oder eine mögliche Bedarfsanforderung für Funktion 1 erfolgen. Soll Funktion 2 weitergeführt werden, gelangt man wieder zu Block 308. Im anderen Fall gelangt man zu Block 315 dem Durchlaufende.

Entspricht die gelesene Codierung in Abfrage 306 nicht der vorgebbaren Codierung Dp2 gelangt man zu Abfrage 310. Dort wird überprüft, ob die Codierung Dp zwischen den beiden vorgenannten Codierungen Dp1 oder Dp2 liegt. Wählt man für die Codierung Dp z.B. 8 bit, also ein Byte, entspräche Dp1 beispielsweise 0 und Dp2 255. Die Schritte dazwischen also 1 bis 254 würden somit in Abfrage 310 geprüft. Entspricht die Codierung Dp nicht einem Wert zwischen Dp1 und Dp2 wird im Block 311 beispielsweise eine Fehlermeldung, daß kein gültiges Pindatum eingelesen war, ausgegeben. Ebenso wäre im Block 311 eine Resetauslösung denkbar. Aus Block 311 gelangt man wiederum zum Durchlaufende in Block 315. Die Abfrage 310 ist dabei aber in sofern optional, daß durch die Belegung der Codierungen Dp1 und Dp2 sowie der Darstellung von Dp aus hier 8 bit zur Darstellung von 0 bis 255 keine andere Möglichkeit, also eines ungültigen Pindatums Dp gegeben ist.

Weiterhin, können Codierungen mit Sonderbedeutungen belegt werden. So kann Dp1 die Sonderbedeutung zugewiesen werden, daß bei Dp1 sofort und irreversibel (ausgenommen durch Reset) auf Funktion 1 umgeschaltet wird. Ebenso kann Dp2 die Sonderbedeutung zugewiesen werden, daß bei Dp2 nie auf Funktion 1 umgeschaltet wird, wobei die Wartezeit Tw quasi mit unendlich belegt wird.

Ist für die Codierung ein Wert zwischen Dp1 und Dp2 gewählt, gelangt man zu Block 312. Darin wird nun einerseits ein Aufwecksignal wie in Block 307 beispielsweise in Form eines speziellen Protokolls an die Meß- bzw. Applikationsmittel oder weitere Steuergeräte, welche über Anschluß 106 angeschlossen sind, gesendet. Gleichzeitig kann hier nun über die Codierung eine Wartezeit Tw vorgegeben sein, in welcher die K-Leitung 111 aktiviert gehalten wird. Eine mögliche Vorgabe für die Wartezeit Tw ist beispielsweise die Multiplikation des Codierwertes Dp also hier 1 bis 254 mit einem vorgebbaren Zeiteinheitswert twn, welcher beispielsweise 100 ms beträgt. Die programmierbare Wartezeit Tw bewegt sich für diesen speziellen Fall somit zwischen 100 ms und 25,4 sec. Durch die programmierbaren Wartezeiten Tw ist sichergestellt, daß beispielsweise ein eigenes Echo des Aufwecksignals bzw. Aufweckprotokolls nicht als Kommunikationsaufbau fehlinterpretiert wird, da erst im Anschluß an die mögliche Echoauftrittszeit ein Signaleingang als Kommunikation registriert wird. Bei Anbindung eines Applikationsgerätes an Anschluß 106 ist es sinnvoll die Wartezeit Tw derart einzustellen, daß das Applikationsgerät noch quittieren kann, bevor eine zu kurze Wartezeit Tw bereits abgelaufen ist. Wenn beispielsweise das Applikationsgerät eine halbe Sekunde bis 1 Sekunde braucht, bis es nach einer Unterbrechung also beispielsweise einem Reset zu senden beginnt, ist es in diesem Fall sinnvoll Wartezeiten eben größer 1 Sekunde einzustellen. Damit ist eine sehr flexible Anpassung an eine Vielzahl von Applikationsgeräten möglich.

So wird in Abfrage 313 überprüft, ob die Kommunikation mit einem Meßmittel- bzw. dem Applikationsmittel auf der Kommunikationsleitung 111 über Pin 106 zustande gekommen ist. Ist dies der Fall, gelangt man zu Block 308, zur Ausführung von Funktion 2 wie oben bereits beschrieben. Kommt keine Kommunikation zustande, wird in Abfrage 314 überprüft, ob die programmierbare Wartezeit Tw abgelaufen ist. Ist dies der Fall, gelangt man beispielsweise zu Block 304, worin Funktion 1 ausgeführt wird. Alternativ könnte man auch zum Durchlaufsende nach Block 315 gelangen. Ist die Wartezeit noch nicht abgelaufen, weiterhin in Abfrage 313 überprüft, ob die gewünschte Kommunikation zustande kommt. Diese Überprüfung kann beispielsweise aufgrund des Eingangs einer Quittungsinformation als Reaktion auf das Aufwecksignal bzw. die Aufweckprotokollbotschaft erfolgen. Generell gilt in dem speziellen Ausführungsbeispiel der Funktion 2 als Kommunikationsleitung, daß für die zu Funktion 2 führenden Codierungen nach jedem Reset die Kommunikationsleitung 111 aktiv ist, und Funktion 1 unterdrückt wird. Wenn also innerhalb der Wartezeit keine Kommunikation mit einem Meßmittel auf der K-Leitung 111 zustandegekommen ist, wird für diesen Betriebszyklus die K-Leitung 111 deaktiviert und die Ausgabe des Signals 1, also Funktion 1 aktiviert. Die jeweiligen Betriebszyklen (vgl. Abfrage 305 und 309) enden beispielsweise mit einer Bedarfsanforderung der jeweiligen Funktion oder speziell durch Einschalten bzw. sonstigen Reset.

## Patentansprüche

1. Verfahren zur Auswahl einer Funktion, die an einem Anschluß (106) einer Steuereinheit (100) realisiert wird, wobei die zu realisierende Funktion aus wenigstens zwei unterschiedlichen Funktionen (304, 308) ausgewählt wird, wobei die Auswahl der zu realisierenden Funktion durch eine vorgebbare Codierung (Dp) getroffen wird und die wenigstens zweite Funktion unterdrückt wird, **dadurch gekennzeichnet, dass** die vorgebbare Codierung (Dp) zusätzlich eine damit vorgebbare Information über eine Zeitdauer (Tw) beinhaltet, nach welcher von der zu realisierenden Funktion zu einer weiteren, innerhalb der Zeitdauer (Tw) unterdrückten Funktion insbesondere der wenigstens zweiten Funktion gewechselt wird und die bisher zu realisierende Funktion unterdrückt wird.

2. Verfahren nach Anspruch 1, **dadurch gekennzeichnet, daß** die wenigstens zwei Funktionen (304, 308) durch wenigstens zwei unterschiedliche Signale (Signal 1, 304, Signal 2, 308), die an dem Anschluß (106) der Steuereinheit (100) anlegbar sind, realisierbar sind, wobei das Signal der zu realisierenden Funktion durch eine Codierung (Dp) ausgewählt und am Anschluß (106) angelegt wird und das wenigstens zweite Signal unterdrückt wird.

3. Verfahren nach Anspruch 1, **dadurch gekennzeichnet, daß** eine Funktion der wenigstens zwei Funktionen (304, 308) durch ein Signal (Signal 1, 304) realisierbar ist, wobei das Signal an dem Anschluß (106) der Steuereinheit (100) anlegbar ist, wobei das Signal (Signal 1, 304) der zu realisierenden Funktion durch eine Codierung (Dp) ausgewählt und am Anschluß (106) angelegt wird und die wenigstens zweite Funktion (Funktion 2, 308) unterdrückt wird.

4. Verfahren nach Anspruch 1 oder 3, **dadurch gekennzeichnet, daß** eine der wenigstens zwei Funktionen (304, 308) die Verwendung des Anschlusses (106) der Steuereinheit (100) als bidirektionale Kommunikationsverbindung (111) einer weiteren Steuereinheit mit der Steuereinheit (100) ist.

5. Vorrichtung zur Auswahl einer Funktion, welche an einem Anschluß (106) der Vorrichtung realisiert wird, mit einem Prozessor (101) und einem ersten Funktionspfad (101, 107, 108, 114, 112), über welchen eine erste Funktion realisiert wird und wenigstens einem weiteren Funktionspfad (101, 109, 110, 102, 111), über welchen eine weitere Funktion realisiert wird, wobei in wenigstens einem Funktionspfad Mittel enthalten sind, die derart ausgestaltet sind, dass die zu realisierende Funktion aus den wenigstens zwei unterschiedlichen Funktionen (304, 308) ausgewählt wird und die Auswahl der zu realisierenden Funktion durch eine vorgebbare Codierung (Dp) getroffen wird und die wenigstens zweite Funktion unterdrückt wird, **dadurch gekennzeichnet, dass** die Vorrichtung derart ausgestaltet ist, dass die vorgebbare Codierung (Dp) zusätzlich eine damit vorgebbare Information über eine Zeitdauer (Tw) beinhaltet, nach welcher von der zu realisierenden Funktion zu einer weiteren, innerhalb der Zeitdauer (Tw) unterdrückten Funktion insbesondere der wenigstens zweiten Funktion gewechselt wird und die bisher zu realisierende Funktion unterdrückt wird.

6. Vorrichtung nach Anspruch 5, **dadurch gekennzeichnet, dass** die Funktionspfade über wenigstens zwei unterschiedliche Anschlüsse (108, 109) des Prozessors verlaufen, die wenigstens zwei Funktionspfade verbunden sind und direkt auf den einen Anschluß (106) der Vorrichtung geführt sind.

7. Vorrichtung nach Anspruch 5, **dadurch gekennzeichnet, dass** die Mittel, die enthalten sind, die abhängig von einer Codierung (Dp) den Funktionspfad der zur realisierenden Funktion auswählen und freischalten und den wenigstens einen weiteren Funktionspfad unterdrücken.

8. Vorrichtung nach Anspruch 5, **dadurch gekennzeichnet, dass** als erste Funktion über den ersten Funktionspfad (101, 107, 108, 114, 112) unidirektional ein Signal (Signal 1) ausgegeben wird.

9. Vorrichtung nach Anspruch 5, **dadurch gekennzeichnet, dass** als wenigstens zweite Funktion über einen zweiten Funktionspfad (101, 109, 110, 102, 111) eine bidirektionale Kommunikation mit einer Recheneinheit durchgeführt wird.

## Claims

1. Method for selecting a function that is implemented at a terminal (106) of a control unit (100), the function to be implemented being selected from at least two different functions (304, 308), the function to be implemented being selected by means of prescribable coding (Dp), and the at least second function being suppressed, **characterized in that** the prescribable coding (Dp) additionally comprises an item of information (which can be prescribed using said coding) about a period of time (Tw), after which a change is made from the function to be implemented to a further function that was suppressed during the period of time (Tw), in particular the at least second function, and the function that was to be implemented previously is suppressed.

2. Method according to Claim 1, **characterized in that** the at least two functions (304, 308) can be implemented by means of at least two different signals (signal 1, 304, signal 2, 308) which can be applied to the terminal (106) of the control unit (100), the signal of the function to be implemented being selected by means of coding (Dp) and being applied to the terminal (106), and the at least second signal being suppressed.

3. Method according to Claim 1, **characterized in that** one function of the at least two functions (304, 308) can be implemented by means of a signal (signal 1, 304), it being possible to apply the signal to the terminal (106) of the control unit (100), the signal (signal 1, 304) of the function to be implemented being selected by means of coding (Dp) and being applied to the terminal (106), and the at least second function (function 2, 308) being suppressed.

4. Method according to Claim 1 or 3, **characterized in that** one of the at least two functions (304, 308) is the use of the terminal (106) of the control unit (100) as a bidirectional communication link (111) between a further control unit and the control unit (100).

5. Device for selecting a function that is implemented at a terminal (106) of the device, said device having a processor (101), a first function path (101, 107, 108, 114, 112) that is used to implement a first function and at least one further function path (101, 109, 110, 102, 111) that is used to implement a further function, at least one function path including means which are configured in such a manner that the function to be implemented is selected from the at least two different functions (304, 308), the function to be implemented is selected by means of prescribable coding (Dp), and the at least second function is suppressed, **characterized in that** the device is configured in such a manner that the prescribable coding (Dp) additionally comprises an item of information (which can be prescribed using said coding) about a period of time (Tw), after which a change is made from the function to be implemented to a further function that was suppressed during the period of time (Tw), in particular the at least second function, and the function that was to be implemented previously is suppressed.

6. Device according to Claim 5, **characterized in that** the function paths run via at least two different terminals (108, 109) of the processor, and the at least two function paths are connected and are routed directly to one terminal (106) of the device.

7. Device according to Claim 5, **characterized in that**, on the basis of coding (Dp), the means which are included select and enable the function path of the function to be implemented and suppress the at least one further function path.

8. Device according to Claim 5, **characterized in that**, as the first function, a signal (signal 1) is output unidirectionally via the first function path (101, 107, 108, 114, 112).

9. Device according to Claim 5, **characterized in that**, as the at least second function, bidirectional communication with a computation unit is carried out via a second function path (101, 109, 110, 102, 111).

## Revendications

1. Procédé pour sélectionner une fonction réalisée sur un raccordement (106) d'une unité de commande (100), en sélectionnant la fonction à réaliser parmi au moins deux fonctions (304, 308) différentes, la sélection de la fonction à réaliser ayant lieu par un codage (Dp) prédéfini et en empêchant l'au moins deuxième fonction,
**caractérisé en ce que**
le codage (Dp) prédéfini contient en outre une information prédéfinie sur la durée (Tw) après laquelle on passe de la fonction à réaliser à une autre fonction empêchée pendant la durée (Tw), en particulier la deuxième fonction, et la fonction qui était réalisée jusqu'à ce moment est neutralisée.

2. Procédé selon la revendication 1,
**caractérisé en ce que**
les deux fonctions (304, 308) peuvent être réalisées par au moins deux signaux (signal 1, 304, signal 2, 308) différents appliqués au raccordement (106) de l'unité de commande (100), le signal de la fonction à réaliser étant sélectionné par un codage (Dp) et appliqué au raccordement (106) alors que le deuxième signal est neutralisé.

3. Procédé selon la revendication 1,
**caractérisé en ce qu'**
une fonction parmi les deux fonctions (304, 308) est réalisée par un signal (signal 1, 304) appliqué au raccordement (106) de l'unité de commande (100), le signal (signal 1, 304) de la fonction à réaliser alors sélectionné par un codage (Dp) est appliqué au raccordement (106), et la deuxième fonction (fonction 2, 308) est neutralisée.

4. Procédé selon la revendication 1 ou 3,
**caractérisé en ce qu'**
une des deux fonctions (304, 308) consiste à utiliser le raccordement (106) de l'unité de commande (100) pour assurer une liaison bidirectionnelle de communication (111) entre une autre unité de commande et l'unité de commande (100).

5. Dispositif pour sélectionner une fonction réalisée sur un raccordement (106) du dispositif, comportant un processeur (101) et un premier chemin fonctionnel (101, 107, 108, 114, 112) grâce auquel une première fonction est réalisée et au moins un autre chemin fonctionnel (101, 109, 110, 102, 111) pour réaliser une autre fonction, au moins un chemin fonctionnel ayant des moyens pour sélectionner la fonction à réaliser parmi au moins deux fonctions (304, 308) différentes, et la fonction à réaliser étant sélectionnée par un codage (Dp) prédéfini alors que la deuxième fonction est neutralisée,
**caractérisé en ce que**
le codage (Dp) prédéfini contient en outre une information prédéfinie sur la durée (Tw) après laquelle on passe de la fonction à réaliser à une autre fonction neutralisée pendant la durée (Tw), en particulier à la deuxième fonction, alors que la fonction réalisée jusqu'à ce moment est neutralisée.

6. Dispositif selon la revendication 5,
**caractérisé en ce que**
les chemins fonctionnels occupent au moins deux raccordements (108, 109) différents du processeur, ces deux chemins fonctionnels étant reliés et directement menés à l'un des raccordements (106) du dispositif.

7. Dispositif selon la revendication 5,
**caractérisé en ce qu'**
en fonction d'un codage (Dp), les moyens contenus sélectionnent et libèrent le chemin fonctionnel de la fonction à réaliser et neutralisent au moins un autre chemin fonctionnel.

8. Dispositif selon la revendication 5,
**caractérisé en ce qu'**
un signal (signal 1) émis dans un seul sens sur le premier chemin fonctionnel (101, 107, 108, 114, 112) sert de première fonction.

9. Dispositif selon la revendication 5,
**caractérisé en ce qu'**
une communication bidirectionnelle avec une unité de calcul est réalisée sous forme d'une deuxième fonction sur un deuxième chemin fonctionnel (101, 109, 110, 102, 111).
